# FASCICULE DE BREVET EUROPEEN

(11) **EP 2 734 389 B1**
(45) Date de publication et mention de la délivrance du brevet: **12.08.2015**
(21) Numéro de dépôt: 12734862.1
(22) Date de dépôt: 29.06.2012
(51) Int. Cl.: B60F 3/00, B63C 13/00

(54) **VÉHICULE AMPHIBIE**
AMPHIBIENFAHRZEUG
AMPHIBIOUS VEHICLE

(30) Priorité: 22.07.2011 FR 1156676
(43) Date de publication de la demande: 28.05.2014
(73) Titulaire: Daniel, Guirec, 22700 Perros Guirec (FR)
(72) Inventeur: Daniel, Guirec, 22700 Perros Guirec (FR)
(74) Mandataire: Maillet, Alain
(86) Numéro de dépôt international: PCT/EP2012/062660
(87) Numéro de publication internationale: WO 2013/013930

(56) Documents cités:
- FR-A1- 2 782 696
- GB-A- 798 956
- GB-A- 2 419 326
- US-A- 2 890 466
- US-A- 3 085 261
- US-A- 4 008 679

## Description

La présente invention concerne un véhicule amphibie comportant des roues escamotables.

Un véhicule amphibie de l'état de la technique comprend une pluralité de roues escamotables qui sont généralement au nombre de trois ou quatre et un châssis qui présente pour chaque roue un logement.

Chaque roue est montée sur un bras qui est solidaire du châssis et qui est mobile afin de faire passer la roue d'une position escamotée à une position de roulement. Dans la position escamotée, la roue est disposée à l'intérieur du châssis afin de limiter la traînée lors du déplacement du véhicule amphibie sur l'eau, et, dans la position de roulement, la roue est disposée en dehors du châssis afin de supporter le châssis lors du déplacement du véhicule amphibie sur la terre.

Pour chaque logement, le véhicule amphibie présente une trappe. Chaque trappe est ainsi mobile entre une position ouverte dans laquelle la roue est libre d'entrer ou de sortir du logement et une position fermée qui ferme le logement et empêche le passage de la roue.

Le verrouillage de chaque trappe en position fermée est souvent réalisé par des moyens complexes et peu résistants au coup de houle, ce qui peut entraîner l'ouverture de la trappe lors du déplacement du véhicule amphibie sur l'eau.

Le document GB 798 956 A décrit un bateau adapté pour fonctionner sur la terre. Le bateau comporte une paire de roues capables de rétraction dans un logement associé. Chaque logement a une paire de trappes articulées adaptées pour fermer le fond des logements lorsque les roues sont dans la position rétractée.

Un objet de la présente invention est de proposer un véhicule amphibie comportant des roues escamotables qui ne présente pas les inconvénients de l'art antérieur et qui en particulier permet un verrouillage de la trappe qui soit simple et résistant aux coups de houles.

A cet effet, est proposé un véhicule amphibie comportant :
- un châssis présentant au moins un logement présentant une ouverture présentant des bords,
- pour ledit ou chaque logement, un dispositif de manutention présentant une partie fixe fixée au châssis et une partie mobile montée mobile sur ladite partie fixe et comportant entre autres une roue, ladite partie mobile étant mobile entre une position de roulement dans laquelle ladite roue est en dehors dudit logement, et une position escamotée dans laquelle ladite roue est dans ledit logement, et
- pour chaque ouverture, un système de trappe présentant une trappe, prévue pour prendre alternativement une position ouverte dans laquelle ladite trappe n'obture pas ladite ouverture ou une position fermée dans laquelle ladite trappe vient en appui contre les bords de l'ouverture et obture au moins en partie ladite ouverture,
   chaque partie mobile étant prévue pour être déplacée dans une position de verrouillage dans laquelle un élément verrouillant de ladite partie mobile verrouille la trappe associée dans la position fermée par sa mise en appui contre ladite trappe.

Avantageusement, ledit élément verrouillant est la roue de ladite partie mobile.

Selon un mode de réalisation particulier, la roue présente une jante, ledit élément verrouillant est ladite jante, ladite trappe présente un berceau et en position de verrouillage la jante se pose sur le berceau.

Avantageusement, la jante est traversante par rapport au pneu, le berceau est constitué de deux parois, chaque paroi recevant l'une des extrémités de la jante en position de verrouillage.

Avantageusement, la trappe est logée à l'intérieur du logement, et ledit élément verrouillant vient dans la position de verrouillage en appui du côté interne dudit logement contre ladite trappe.

Avantageusement, ledit système de trappe comporte un système de manoeuvre comportant une armature sur laquelle la trappe est montée, et des moyens de déplacement prévus pour déplacer ladite armature, ladite armature présente un espace vide permettant le passage dudit élément verrouillant et sa mise en appui contre ladite trappe en position de verrouillage, et la trappe est fixée sur l'armature par l'intermédiaire d'un système de suspension.

Avantageusement, la zone d'appui dudit élément verrouillant en position verrouillée est concentrique par rapport à l'ouverture.

Avantageusement, les moyens de déplacement comportent deux porte-rainures, chacun disposé de part et d'autre de l'ouverture et présentant une rainure de guidage, et un système d'activation prévu pour déplacer l'armature le long des deux rainures.

Selon un autre mode de réalisation particulier, ladite trappe est montée mobile en rotation sur ledit châssis autour d'un axe de rotation principal, ladite trappe comporte une languette la prolongeant au-delà de l'axe de rotation principal, et ledit élément verrouillant vient, en position de verrouillage, en appui contre ladite languette.

Avantageusement, la trappe comporte des premiers moyens formant butée constitués par des extensions réalisées au niveau de l'extrémité libre de la trappe et s'étendant transversalement vers l'extérieur de la trappe et qui sont destinés à coopérer avec les bords de l'ouverture pour empêcher la rotation de ladite trappe au-delà d'une position limite correspondant à l'entrée de ladite trappe dans le logement.

Avantageusement, un rouleau est monté libre en rotation au niveau de l'extrémité libre de la trappe.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue d'un véhicule amphibie selon l'invention,
les Figs. 2 à 5 représentent un détail de la partie avant du véhicule amphibie de la Fig. 1 selon différentes positions de la roue avant,
la Fig. 6 est une vue éclatée d'un système de trappe de la partie avant du véhicule amphibie,
la Fig. 6B montre une variante de l'invention, et
les Figs. 7 à 9 représentent un détail de la partie arrière du véhicule amphibie de la Fig. 1 selon différentes positions de la roue arrière.

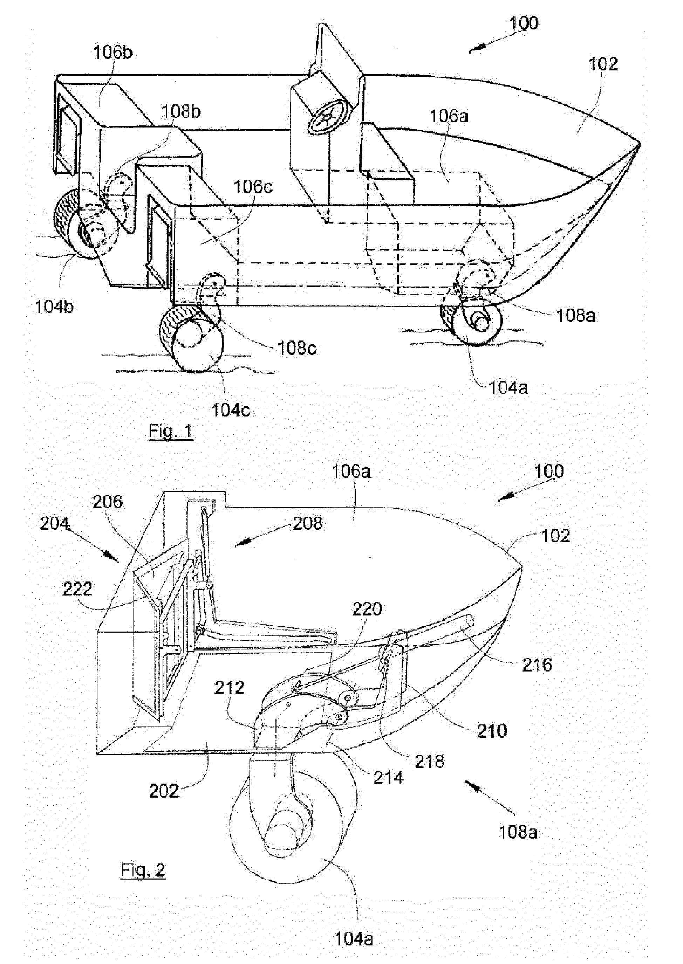

Dans la description qui suit, les termes relatifs à une position sont pris en référence à un véhicule amphibie en position d'utilisation, c'est-à-dire comme il est représenté sur la Fig. 1.

Dans le mode de réalisation de l'invention présenté ici, le véhicule amphibie prend la forme d'un bateau, mais il pourrait prendre la forme d'un autre type de véhicule comme par exemple une voiture.

La Fig. 1 montre un véhicule amphibie 100 qui comprend un châssis 102 présentant une pluralité de logements 106a-c qui sont ici au nombre de trois et pour chaque logement 106a-c, un dispositif de manutention 108a-c présentant une roue 104a-c.

Les trois roues 104a-c sont ici réparties entre une roue avant 104a et deux roues arrière 104b-c dont l'une est disposée à gauche (104b) et dont l'autre est disposée à droite (104c), c'est-à-dire de part et d'autre du plan médian du véhicule amphibie 100.

Chaque dispositif de manutention 108a-c présente une partie fixe fixée au châssis 102, et en particulier à l'intérieur du logement 106a-c associé, et une partie mobile 104a-c montée mobile sur la partie fixe et comportant entre autres ladite roue 104a-c.

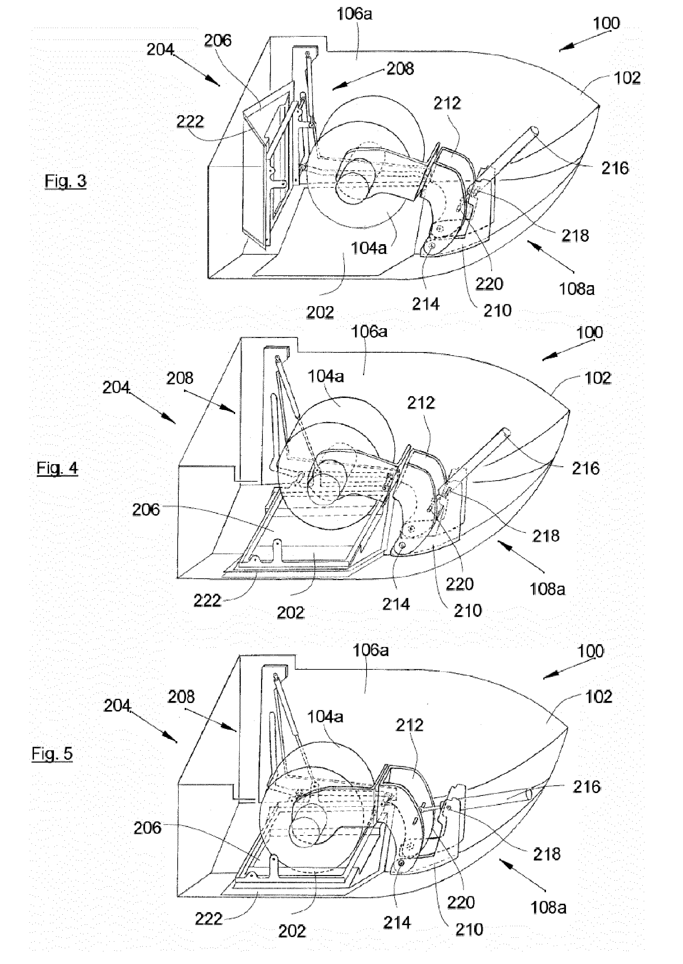

La partie mobile 104a-c est mobile entre une position de roulement (Fig. 1) dans laquelle la roue 104a-c est en dehors du logement 106a-c et supporte le châssis 102, et une position escamotée (Figs. 3 à 5, et 9) dans laquelle la roue 104a-c et la partie mobile sont dans le logement 106a-c.

La Fig. 2 montre la partie avant du véhicule amphibie 100. Le logement 106a présente une ouverture 202 entre l'extérieur et l'intérieur dudit logement 106a et qui permet le passage de la roue avant 104a. L'ouverture 202 est ici horizontale et réalisée dans le fond du châssis 102.

Pour fermer l'ouverture 202, le véhicule amphibie 100 présente un système de trappe 204 comportant une trappe 206 et un système de manoeuvre 208 sur lequel ladite trappe 206 est montée et qui permet de faire passer la trappe 206 d'une position ouverte (Figs. 2 et 3) dans laquelle la trappe 206 n'obture pas l'ouverture 202, à une position fermée (Fig. 4) dans laquelle la trappe 206 obture l'ouverture 202.

La Fig. 2 montre le véhicule amphibie 100 lorsque la trappe 206 est en position ouverte et la roue avant 104a est en position de roulement.

La Fig. 3 montre le véhicule amphibie 100 lorsque la trappe 206 est en position ouverte et la roue avant 104a est en position escamotée.

La Fig. 4 montre le véhicule amphibie 100 lorsque la trappe 206 est en position fermée et la roue avant 104a est en position escamotée.

Pour empêcher tout déplacement de la trappe 206 en position fermée, la partie mobile 104a est prévue pour être déplacée, plus particulièrement à partir de la position escamotée, dans une position de verrouillage (Fig. 5) dans laquelle la partie mobile 104a verrouille la trappe 206 dans la position fermée.

La partie fixe comporte une base 210 fixée dans le fond du châssis 102. La partie mobile comporte la roue avant 104a, une jambe 212 au voisinage de l'ouverture 202, et un moyen d'activation 216. La jambe 212 est montée mobile en rotation sur la base 210 autour d'un premier axe de rotation 214 qui est ici perpendiculaire au plan médian. Le moyen d'activation 216 est ici un vérin dont le cylindre est monté mobile en rotation sur la base 210 autour d'un deuxième axe de rotation 218 parallèle au premier axe de rotation 214 et dont la tige est montée mobile en rotation sur la jambe 212 autour d'un troisième axe de rotation 220 parallèle au premier axe de rotation 214.

Dans le mode de réalisation de l'invention présenté ici, la partie mobile 104a, 212, 216 présente un élément verrouillant qui est ici la roue 104a, qui dans la position de verrouillage, est mis en appui contre un élément de verrouillage 206 du système de trappe 204 associé, et qui est ici la trappe 206. Dans un autre mode de réalisation de l'invention, il est possible de prévoir que l'élément verrouillant soit par exemple la jambe 212 et que l'élément de verrouillage soit une autre partie du système de trappe 204. Ainsi toute la puissance du dispositif de manutention 108a est mise au service du verrouillage de la trappe 206 et ceci en l'absence de tout autre dispositif additionnel. L'invention consiste ainsi à mettre en appui directement l'élément verrouillant 104a contre la trappe 206, c'est à dire sans utilisation d'élément intermédiaire.

La base 210 prend la forme d'un L dont la branche horizontale est orientée vers l'ouverture 202. La jambe 212 est articulée au niveau de l'extrémité libre horizontale du L et le vérin 216 est articulé au niveau de l'extrémité libre verticale du L.

Ainsi lorsque la roue avant 104a est en position de roulement, l'activation du moyen d'activation 216 à l'aide d'un système de commande approprié entraîne la rétractation de la tige dans le cylindre, et donc le relèvement de la roue avant 104a dans le logement 106a par rotation de la jambe 212 autour du premier axe de rotation 214. La roue avant 104a passe ainsi successivement de la position représentée à la Fig. 2, aux positions des Figs. 3 et 4.

A l'inverse, lorsque la roue avant 104a est en position escamotée, l'activation du moyen d'activation 216 à l'aide du système de commande entraîne la sortie de la tige hors du cylindre, et donc l'abaissement de la roue avant 104a en dehors du logement 106a par rotation de la jambe 212 autour du premier axe de rotation 214.

La trappe 206 est mobile à l'intérieur du logement 106a et en position fermée, elle obture l'ouverture 202 en se plaçant au-dessus d'elle.

En position de verrouillage, la roue avant 104a est abaissée à partir de la position escamotée par activation du moyen d'activation 216 et elle vient alors en appui contre la trappe 206, et en particulier ici contre la face supérieure de la trappe 206 ce qui verrouille efficacement sa position et la rend étanche.

A l'inverse, lorsque la roue avant 104a est en position de verrouillage, l'activation du moyen d'activation 216 permet de relever la roue avant 104a jusqu'à la position escamotée représentée à la Fig. 4, où la roue avant 104a n'est plus en contact avec la trappe 206 et où cette dernière peut donc être déplacée vers la position ouverte.

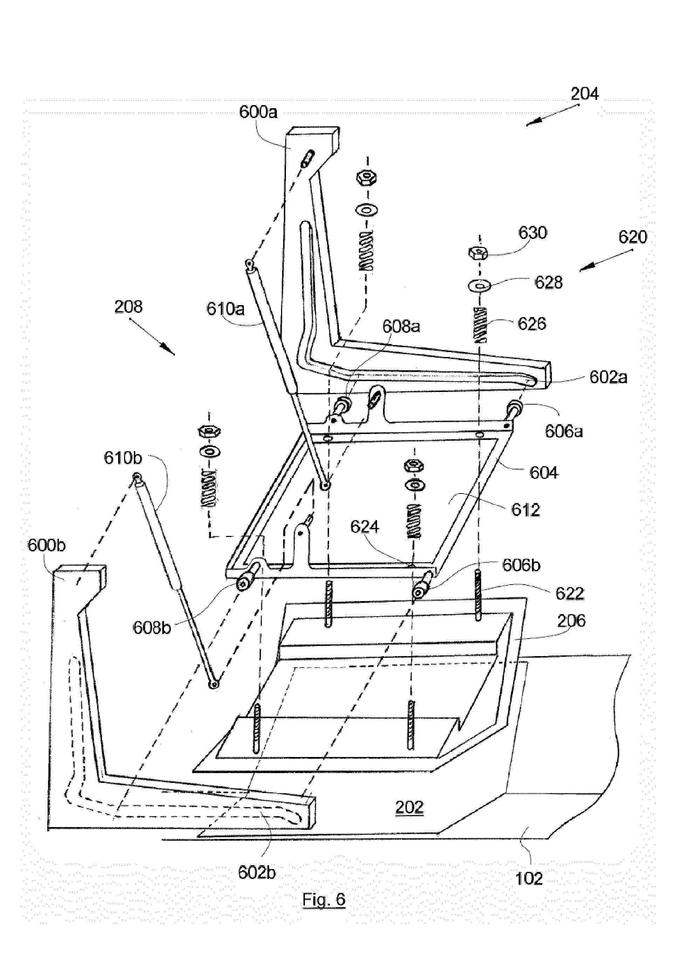

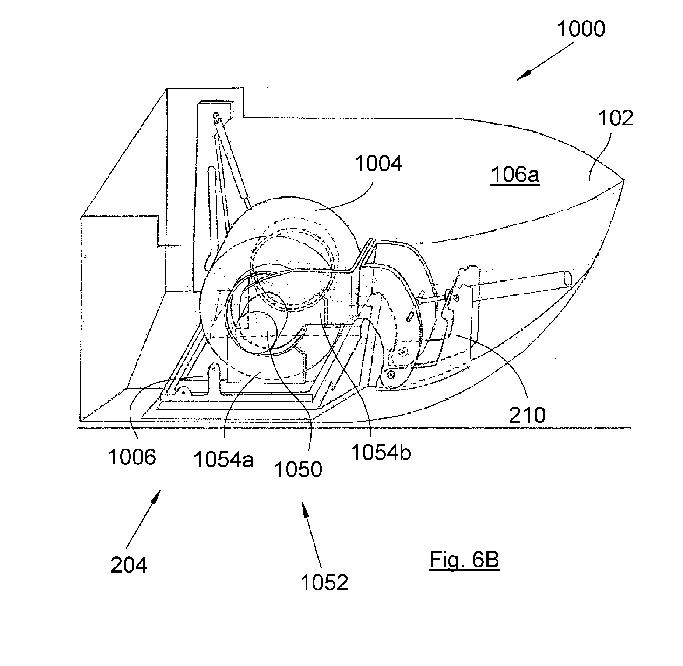

La Fig. 6 montre un mode de réalisation particulier du système de trappe 204 qui est disposé à l'intérieur du logement 106a.

Le système de manoeuvre 208 est ici symétrique par rapport au plan médian et il comporte:
- deux porte-rainures 600a-b, disposés de part et d'autre de l'ouverture 202, présentant une rainure de guidage 602a-b, chacune s'étendant ici dans un plan vertical et se faisant face l'une à l'autre,
- une armature 604 qui s'étend entre les deux porte-rainures 600a-b et qui comporte pour chaque rainure 602a-b, deux moyens de roulement 606a-b et 608a-b prévus pour rouler dans ladite rainure 602a-b, et
- un système d'activation 610a-b prévu pour déplacer l'armature 604 le long des deux rainures 602a-b, d'une première position correspondant à la position ouverte de la trappe 206, à une deuxième position correspondant à la position fermée de la trappe 206, et inversement.

Les deux porte-rainures 600a-b et le système d'activation 610a-b forment des moyens de déplacement prévus pour déplacer l'armature 604.

La trappe 206 est fixée à l'armature 604 qui est ouverte, c'est-à-dire qu'elle présente un espace vide 612 qui permet le passage de la roue avant 104a, et plus particulièrement du pneu et sa mise en appui contre une face de la trappe 206 en position de verrouillage.

Pour assurer une résistance aux coups de houle homogène tout le long du contact de la trappe 206 contre le châssis 102, la position d'appui de la roue avant 104a est telle que la zone d'appui de la roue avant 104a sur ladite face en position de verrouillage soit centrée, et plus particulièrement concentrique par rapport à l'ouverture 202. Ainsi la force de verrouillage opposée à la houle en périphérie de l'ouverture 202 est partout maximale et la force exercée par la roue avant 104a ne tend pas à créer un couple dans la trappe 206.

L'espace vide 612 est ici sensiblement centré par rapport à la face de la trappe 206 contre laquelle le pneu de la roue avant 104a vient en appui en position de verrouillage.

L'armature 604 prend ici la forme d'un cadre et l'espace vide 612 se positionne de manière à centrer la trappe 206 par rapport à l'ouverture 202.

Les profils de chaque rainure 602a-b sont adaptés pour permettre le déplacement de l'armature 604 et de la trappe 206 entre la position ouverte et la position fermée tout en évitant les contacts entre les pièces mobiles et les pièces fixes du véhicule amphibie 100. Dans le mode de réalisation de l'invention présenté ici, les rainures 602a-b sont prévues pour qu'en position fermée, la trappe 206 soit placée horizontalement, et pour qu'en position ouverte, la trappe 206 soit placée verticalement.

Le système d'activation 610a-b est ici constitué de deux vérins 610a-b qui sont synchronisés l'un avec l'autre.

Chaque vérin 610a-b est fixé par des liaisons pivot dont les axes de rotation sont perpendiculaires au plan médian, d'une part, par son cylindre à un élément fixe du véhicule amphibie 100 qui est ici l'un des porte-rainures 600a-b, et, d'autre part, par sa tige à l'armature 604.

Pour assurer une bonne étanchéité et la mise en contact entre les bords de l'ouverture 202 et la trappe 206, celle-ci est fixée à l'armature 604 par l'intermédiaire d'un système de suspension 620 qui autorise un déplacement de la trappe 206 par rapport à l'armature 604.

Les dimensions de la trappe 206 sont telles qu'elle ne peut pas traverser l'ouverture 202. Ainsi lorsque la roue avant 104a appuie sur la trappe 206 en position fermée, celle-ci s'enfonce et vient s'appuyer contre les bords de l'ouverture 202. Les bords de l'ouverture 202 forment ainsi une butée pour la trappe 206.

Pour assurer une bonne étanchéité et faciliter la mise en contact entre la trappe 206 et les bords de l'ouverture 202, un joint périphérique 222 est mis en place entre la trappe 206 et les bords de l'ouverture 202. Le joint périphérique 222 peut être fixé à la trappe 206 ou aux bords de l'ouverture 202.

Dans le mode de réalisation de l'invention présenté ici, le système de suspension 620 comporte:
- quatre tiges filetées 622 fixées à la trappe 206 et dont les extrémités libres sont prévues pour traverser des perçages 624 que l'armature 604 présente à cet effet,
- pour chaque tige filetée 622, un ressort de compression 626 qui s'enfile sur la tige filetée 622 après que celle-ci ait été elle-même enfilée dans le perçage 624,
- pour chaque ressort de compression 626, une rondelle 628 qui s'enfile sur la tige filetée 622 après la mise en place du ressort de compression 626, et
- pour chaque rondelle 628, un écrou 630 qui se visse sur la tige filetée 622 après la mise en place de la rondelle 628.

Ainsi lorsque la roue avant 104a appuie sur la trappe 206, celle-ci se déplace par rapport à l'armature 604 du fait de la compression des ressorts de compression 626.

Le relâchement de la pression exercée par la roue avant 104a entraîne le relèvement de la trappe 206 qui se décolle des bords de l'ouverture 202.

Dans le cas d'un véhicule amphibie 100 dont le châssis 102 prend la forme d'une coque de bateau, la trappe 206 prend avantageusement une forme qui prolonge la coque afin de limiter la traînée lors de la navigation.

Pour vider l'eau qui aurait pu s'introduire dans le logement 106a, une pompe peut être prévue.

La Fig. 6B montre un véhicule amphibie 1000 dans lequel la roue 1004 présente classiquement une jante 1050. L'élément verrouillant de la partie mobile 1004 est alors la jante 1050 de la roue 1004. L'utilisation de la jante 1050 évite que, si le pneu se déforme, les coups de houle contre la trappe 1006 sont trop puissants, la trappe 1006 s'entrouvre et que l'eau pénètre dans le logement 106a. La jante 1050 vient dans la position de verrouillage en appui du côté interne du logement 106a contre la trappe 1006. L'invention consiste ainsi à mettre en appui directement l'élément verrouillant 1050 contre la trappe 1006, c'est à dire sans utilisation d'élément intermédiaire.

Pour permettre à la jante 1050 d'appuyer sur la trappe 1006, celle-ci présente un berceau 1052 sur lequel vient se poser la jante 1050 en position de verrouillage.

Pour des raisons d'équilibrage, la jante 1050 est traversante par rapport au pneu et le berceau 1052 est constitué de deux parois 1054a-b qui sont ici parallèles au plan de symétrie longitudinal du véhicule et orientées vers l'intérieur du logement 106a, chaque paroi 1054a-b recevant l'une des extrémités de la jante 1050 en position de verrouillage.

Dans ce mode de réalisation, le système de trappe comporte également un système de manoeuvre avec un système de suspension qui sont conformes à ceux du mode de réalisation de la Fig. 6 et le berceau 1052 traverse l'espace vide pour recevoir la jante 1050.

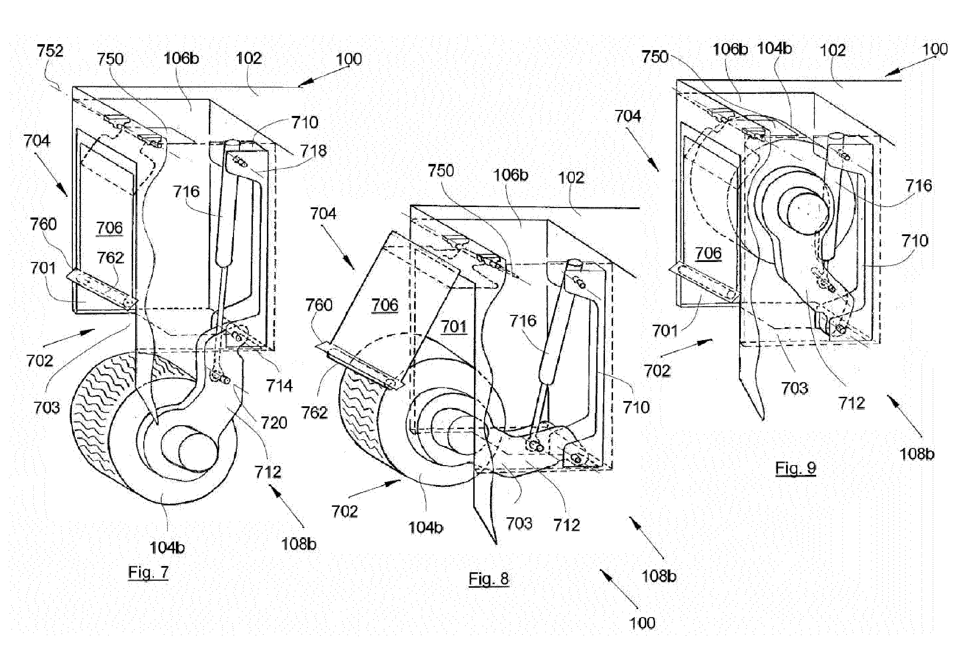

La Fig. 7 montre la partie arrière du véhicule amphibie 100. Le logement 106b présente une ouverture 702 entre l'extérieur et l'intérieur dudit logement 106b et qui permet le passage de la roue arrière 104b lors de sa manoeuvre.

Dans le mode de réalisation de l'invention présenté ici, le logement 106b prend la forme d'un parallélépipède rectangle et l'ouverture 702 s'étend sur deux faces de ce parallélépipède, et plus particulièrement sur une face verticale et sur une face horizontale. L'ouverture 702 se décompose donc entre une ouverture verticale 701 et une ouverture horizontale 703.

Pour fermer au moins en partie l'ouverture 702, et en particulier l'ouverture verticale 701, le véhicule amphibie 100 présente un système de trappe 704 qui comporte une trappe 706 qui est montée mobile en rotation sur le châssis 102 autour d'un axe de rotation principal 752 entre une position ouverte (Fig. 8) dans laquelle la trappe 706 n'obture pas l'ouverture verticale 701, et une position fermée (Figs. 7 et 9) dans laquelle la trappe 706 obture l'ouverture verticale 701.

La Fig. 7 montre le véhicule amphibie 100 lorsque la trappe 706 est en position fermée et la roue arrière 104b est en position de roulement.

La Fig. 8 montre le véhicule amphibie 100 lorsque la trappe 706 est en position ouverte et la roue arrière 104b est en train d'être déplacée vers la position escamotée.

Pour empêcher tout déplacement de la trappe 706 en position fermée, la partie mobile 104b-c est prévue pour être déplacée, à partir de la position escamotée, dans une position de verrouillage (Fig. 9) dans laquelle la partie mobile 104b-c verrouille la trappe 706 dans la position fermée.

La partie fixe comporte une base 710 fixée au châssis 102. La partie mobile comprend la roue 104b-c, une jambe 712 au voisinage de l'ouverture 702, et un moyen d'activation 716. La jambe 712 est montée mobile en rotation sur la base 710 autour d'un premier axe de rotation 714 qui est ici perpendiculaire au plan médian. Le moyen d'activation 716 est ici un vérin dont le cylindre est monté mobile en rotation sur la base 710 autour d'un deuxième axe de rotation 718 parallèle au premier axe de rotation 714 et dont la tige est montée mobile sur la jambe 712 autour d'un troisième axe de rotation 720 parallèle au premier axe de rotation 714.

Dans le mode de réalisation de l'invention présenté ici, la partie mobile 104b-c, 712, 716 présente un élément verrouillant qui est ici la roue 104b-c, qui dans la position de verrouillage, est mis en appui contre un élément de verrouillage 750 du système de trappe 704 associé. Dans un autre mode de réalisation de l'invention, il est possible de prévoir que l'élément verrouillant soit par exemple la jambe 714. Ainsi toute la puissance du dispositif de manutention 108b-c est mise au service du verrouillage de la trappe 706 et ceci en l'absence de tout autre dispositif additionnel. L'invention consiste ainsi à mettre en appui directement l'élément verrouillant 104b-c contre la trappe 706, c'est à dire sans utilisation d'élément intermédiaire.

La base 710 prend la forme d'un U fixé verticalement contre la paroi verticale du logement 106b qui est en face de la trappe 706. La jambe 714 est articulée au niveau de l'une des extrémités libres du U et le vérin 716 est articulé au niveau de l'autre extrémité libre du U.

Ainsi lorsque la roue arrière 104b est en position de roulement, l'activation du moyen d'activation 716 à l'aide du système de commande entraîne la rétractation de la tige dans le cylindre, et donc le relèvement de la roue arrière 104b dans le logement 106b par rotation de la jambe 712 autour du premier axe de rotation 714. La roue arrière 104b passe ainsi successivement de la position représentée à la Fig. 7, aux positions des Figs. 8 et 9.

A l'inverse, lorsque la roue arrière 104b est en position escamotée, l'activation du moyen d'activation 716 à l'aide du système de commande entraîne la sortie de la tige hors du cylindre, et donc l'abaissement de la roue arrière 104b en dehors du logement 106b par rotation de la jambe 712 autour du premier axe de rotation 714.

La trappe 706 est mobile à l'extérieur du logement 106b et en position fermée, elle obture l'ouverture verticale 701.

Le système de trappe 704 présente une languette 750 solidaire de la trappe 706 et qui la prolonge au-delà de l'axe de rotation principal 752, c'est-à-dire que par rapport à un plan vertical perpendiculaire au plan médian et passant par l'axe de rotation principal 752, la languette 750 est disposée d'un côté de ce plan vertical et la trappe 706 est disposée de l'autre côté de ce plan vertical. La languette 750 constitue l'élément de verrouillage 750 du système de trappe 704. Il est possible de prévoir que l'élément de verrouillage soit une autre partie du système de trappe 704.

En position de verrouillage, la roue arrière 104b est relevée jusqu'à venir en appui contre la languette 750 du système de trappe 704.

Le système de trappe 704 comporte des premiers moyens formant butée et le châssis 102 comporte des deuxièmes moyens formant butée qui coopèrent avec les premiers moyens formant butée pour empêcher la rotation de la trappe 706 au-delà d'une position limite correspondant à l'entrée de la trappe 706 dans le logement 106b.

Ainsi lorsque la roue arrière 104b vient en appui contre la languette 750, les premiers moyens formant butée et les deuxièmes moyens formant butée coopèrent pour empêcher la rotation de la trappe 706 au-delà de sa position limite et bloquent ainsi la trappe 706 ce qui verrouille efficacement sa position.

A l'inverse, lorsque la roue arrière 104b est en position de verrouillage, l'activation du moyen d'activation 716 permet d'abaisser la roue arrière 104b, ce qui permet de libérer la languette 750 et donc la trappe 706 qui est libre de pivoter pour permettre le passage de la roue arrière 104b jusqu'à la position de roulement.

Dans le mode de réalisation de l'invention présenté ici, les premiers moyens formant butée sont constitués par des extensions 760 réalisées au niveau de l'extrémité libre de la trappe 706 et qui s'étendent transversalement vers l'extérieur de la trappe 706, et les deuxièmes moyens formant butée sont constitués par les bords de l'ouverture verticale 701. Les extensions 760 viennent en butée contre les bords de l'ouverture verticale 701 comme cela est montré sur les Figs. 7 et 9, ce qui empêche la rotation de la trappe 706 vers l'intérieur du logement 106b.

Dans un autre mode de réalisation de l'invention non représenté ici, les premiers moyens formant butée sont constitués par la languette 750 et les deuxièmes moyens formant butée sont constitués par une paroi du logement 106b, ici la paroi horizontale supérieure. La languette 750 vient en butée contre la paroi, ce qui empêche la rotation de la trappe 706 vers l'intérieur du logement 106b.

La trappe 706 s'ouvre sous l'action de la roue arrière 104b et pour faciliter cette ouverture, un rouleau 762 est monté libre en rotation au niveau de l'extrémité libre de la trappe 706. Lors de la remontée de la roue arrière 104b, celle-ci vient en contact avec le rouleau 762 qui roule sur la roue arrière 104b au fur et à mesure de la progression de cette dernière.

Bien entendu, la présente invention n'est pas limitée aux exemples et modes de réalisation décrits et représentés, mais elle est susceptible de nombreuses variantes accessibles à l'homme de l'art.

## Revendications

1. Véhicule amphibie (100, 1000) comportant :
- un châssis (102) présentant au moins un logement (106a-c) présentant une ouverture (202, 702) présentant des bords,
- pour ledit ou chaque logement (106a-c), un dispositif de manutention (108a-c) présentant une partie fixe (210, 710) fixée au châssis (102) et une partie mobile (104a-c, 212, 216, 712, 716, 1004) montée mobile sur ladite partie fixe (210, 710) et comportant entre autres une roue (104a-c, 1004), ladite partie mobile (104a-c, 212, 216, 712, 716, 1004) étant mobile entre une position de roulement (Fig. 1) dans laquelle ladite roue (104a-c, 1004) est en dehors dudit logement (106a-c), et une position escamotée (Figs. 3 à 5, 9 et 6B) dans laquelle ladite roue (104a-c, 1004) est dans ledit logement (106a-c), et
- pour chaque ouverture (202, 702), un système de trappe (204, 704) présentant une trappe (206, 706, 1006), prévue pour prendre alternativement une position ouverte (Figs. 2, 3 et 8) dans laquelle ladite trappe (206, 706, 1006) n'obture pas ladite ouverture (202, 702) ou une position fermée (Figs. 5, 9 et 6B) dans laquelle ladite trappe (206, 706, 1006) vient en appui contre les bords de l'ouverture (202, 702) et obture au moins en partie ladite ouverture (202, 702),
chaque partie mobile (104a-c, 212, 216, 712, 716, 1004) étant prévue pour être déplacée dans une position de verrouillage dans laquelle un élément verrouillant (104a-c, 1050) de ladite partie mobile (104a-c, 212, 216, 712, 716, 1004) verrouille la trappe (206, 706, 1006) associée dans la position fermée par sa mise en appui contre ladite trappe (206, 706, 1006).

2. Véhicule amphibie (100, 1000) selon la revendication 1, **caractérisé en ce que** ledit élément verrouillant est la roue (104a-c, 1050) de ladite partie mobile (104a-c, 212, 216, 712, 716, 1004).

3. Véhicule amphibie (1000) selon la revendication 2, **caractérisé en ce que** la roue (1004) présente une jante (1050), **en ce que** ledit élément verrouillant est ladite jante (1050), **en ce que** ladite trappe (1006) présente un berceau (1052) et **en ce qu'**en position de verrouillage la jante (1050) se pose sur le berceau (1052).

4. Véhicule amphibie (1000) selon la revendication 3, **caractérisé en ce que** la jante (1050) est traversante par rapport au pneu, **en ce que** le berceau (1052) est constitué de deux parois (1054a-b), chaque paroi (1054a-b) recevant l'une des extrémités de la jante (1050) en position de verrouillage.

5. Véhicule amphibie (100, 1000) selon l'une des revendications 1 à 4, **caractérisé en ce que** la trappe (206, 1006) est logée à l'intérieur du logement (106a), et **en ce que** ledit élément verrouillant (104a, 1004) vient dans la position de verrouillage en appui du côté interne dudit logement (106a) contre ladite trappe (206, 1006).

6. Véhicule amphibie (100, 1000) selon l'une des revendications 1 à 5, **caractérisé en ce que** ledit système de trappe (204) comporte un système de manoeuvre (208) comportant une armature (604) sur laquelle la trappe (206, 1006) est montée, et des moyens de déplacement prévus pour déplacer ladite armature (604), **en ce que** ladite armature (604) présente un espace vide (612) permettant le passage dudit élément verrouillant (104a, 1004) et sa mise en appui contre ladite trappe (206, 1006) en position de verrouillage, et **en ce que** la trappe (206, 1006) est fixée sur l'armature (604) par l'intermédiaire d'un système de suspension (620).

7. Véhicule amphibie (100) selon la revendication 6, **caractérisé en ce que** la zone d'appui dudit élément verrouillant (104a) en position verrouillée est concentrique par rapport à l'ouverture (202).

8. Véhicule amphibie (100) selon l'une des revendications 6 ou 7, **caractérisé en ce que** les moyens de déplacement comportent deux porte-rainures (600a-b), chacun disposé de part et d'autre de l'ouverture (202) et présentant une rainure de guidage (602a-b), et un système d'activation (610a-b) prévu pour déplacer l'armature (604) le long des deux rainures (602a-b).

9. Véhicule amphibie (100) selon l'une des revendications 1 ou 2, **caractérisé en ce que** ladite trappe (706) est montée mobile en rotation sur ledit châssis (102) autour d'un axe de rotation principal (752), **en ce que** ladite trappe (706) comporte une languette (750) la prolongeant au-delà de l'axe de rotation principal (752), et **en ce que** ledit élément verrouillant (104a-c) vient, en position de verrouillage, en appui contre ladite languette (750).

10. Véhicule amphibie (100) selon la revendication 9, **caractérisé en ce que** la trappe (706) comporte des premiers moyens formant butée constitués par des extensions (760) réalisées au niveau de l'extrémité libre de la trappe (706) et s'étendant transversalement vers l'extérieur de la trappe (706) et qui sont destinés à coopérer avec les bords de l'ouverture (702) pour empêcher la rotation de ladite trappe (706) au-delà d'une position limite correspondant à l'entrée de ladite trappe (706) dans le logement (106b-c).

11. Véhicule amphibie (100) selon l'une des revendications 9 ou 10, **caractérisé en ce qu'**un rouleau (762) est monté libre en rotation au niveau de l'extrémité libre de la trappe (706).

## Patentansprüche

1. Amphibienfahrzeug (100, 1000) umfassend :
- ein Fahrgestell (102), das wenigstens eine Aufnahme (106a-c) aufweist, welche eine Öffnung (202, 702) aufweist, welche Ränder aufweist,
- für die genannte oder jede Aufnahme (106a-c), eine Handhabungsvorrichtung (108 a-c), die einen, am Fahrgestell (102) befestigten festen Teil (210, 710) und ein, auf dem genannten festen Teil (210, 710) beweglich montierten, bewegbaren und unter anderem ein Rad (104a-c, 1004) beinhaltenden Teil (104a-c), 212, 216, 712, 716, 1004) aufweist, wobei der bewegbare Teil (104a-c, 212, 216, 712, 716, 1004) zwischen einer Rollstellung (Fig. 1), in der sich das genannte Rad (104a-c, 1004) ausserhalb der genannten Aufnahme (106a-c) und einer eingezogenen Stellung (Fig. 3 bis 5, 9 und 6B), in der sich das genannte Rad (104a-c , 1004) in der genannten Aufnahme (106a-c) befindet, bewegbar ist und
- für jede Öffnung (202, 702) ein Klappensystem (204, 704), welches eine Klappe (206, 706, 1006) aufweist, die dazu vorgesehen ist, abwechselnd eine geöffnete Stellung (Fig. 2, 3 und 8), in der die genannte Klappe (206, 706, 1006) die genannte Öffnung (202, 702) nicht verschließt, oder eine geschlossene Stellung (Fig. 5, 9 und 6B), in der die genannte Klappe (206, 706, 1006) an den Rändern der Öffnung (202, 702) zur Anlage kommt und die genannte Öffnung (202, 702) wenigstens teilweise verschließt, einzunehmen,
wobei jeder bewegbare Teil (104a-c, 212, 216, 712, 716, 1004) dazu vorgesehen ist, in eine Verriegelungsstellung gebracht zu werden, in der ein Verriegelungsglied (104a-c, 1050) des bewegbaren Teils (104a-c, 212, 216, 712, 716, 1004) die Klappe (206, 706, 1006) in der geschlossenen Stellung in Verbindung mit seiner Anlage an der genannten Klappe (206, 706, 1006) verriegelt.

2. Amphibienfahrzeug (1000) gemäß Patentanspruch 2, **dadurch gekennzeichnet, dass** das Verriegelungsglied das Rad (104a-c, 1050) des gennanten bewegbaren Teils (104a-c, 212, 216, 712, 716, 1004) ist.

3. Amphibienfahrzeug (1000) gemäß Patentanspruch 2, **dadurch gekennzeichnet, dass** das Rad (1004) eine Felge (1050) aufweist, das genannte Verriegelungsglied die genannte Felge (1050) ist und die genannte Klappe (1006) eine Felgenauflage (1052) aufweist, sowie dadurch, dass die Felge (1050) in der Verriegelungsstellung auf der Felgenauflage (1052) zu liegen kommt.

4. Amphibienfahrzeug (1000) gemäß Patentanspruch 3, **dadurch gekennzeichnet, dass** die Felge (1050) zum Reifen durchgehend ist, die Felgenauflage (1052) aus zwei Wänden (1054a-b) besteht, wobei in der Verriegelungsstellung jede Wand (1054a-b) eines der Felgenenden (1050) aufnimmt.

5. Amphibienfahrzeug (100, 1000) gemäß einem der Patentansprüche 1 bis 4, **dadurch gekennzeichnet, dass** die Klappe (2006, 1006) im Inneren der Aufnahme (106) angeordnet ist und das genannte Verriegelungsglied (104a, 1004) in der Verriegelungsstellung auf der Innenseite der genannten Aufnahme (106a) zur Anlage an die genannte Klappe (206, 1006) kommt.

6. Amphibienfahrzeug (100, 1000) gemäß einem der Patentansprüche 1 bis 5, **dadurch gekennzeichnet, dass** das genannte Klappensystem (204) ein Betätigungssystem (208) umfasst, welches eine Armatur (604) beinhaltet, auf der die Klappe (206, 1006) montiert ist, sowie Bewegungsmittel, die dazu vorgesehen sind, die genannte Armatur (604) zu verfahren, die genannte Armatur (604) einen leeren Raum (612) aufweist, der den Durchtritt des genannten Verriegelungsglieds (104a, 1004) und dessen Anlage an der genannten Klappe (206, 2006) in der Verriegelungsstellung ermöglicht und die Klappe (206, 1006) über ein Aufhängungssystem (620) an der Armatur (604) befestigt ist.

7. Amphibienfahrzeug (100) gemäß Patentanspruch 6, **dadurch gekennzeichnet, dass** der Anlagebereich des genannten Verriegelungsglieds (104a) in verriegelter Stellung konzentrisch zur Öffnung (202) ist.

8. Amphibienfahrzeug (100) gemäß einem der Patentansprüche 6 oder 7, **dadurch gekennzeichnet, dass** die Fortbewegungsmittel zwei Nutträger (600a-b) umfassen, die beidseitig der Öffnung (202) angeordnet sind und eine Führungsnut (602a-b) aufweisen, sowie ein Aktivierungssystem (610a-b), das dazu vorgesehen ist, die Armatur (604) entlang der beiden Nuten (602a-b) zu verfahren.

9. Amphibienfahrzeug (100) gemäß einem der Patentansprüche 1 oder 2, **dadurch gekennzeichnet, dass** die genannte Klappe (706) um eine Hauptdrehachse (752) drehbeweglich auf dem genannten Fahrgestell (102) montiert ist, die genannte Klappe (706) eine Zunge (750) beinhaltet, die sie über die Hauptdrehachse (752) hinaus verlängert und das genannte Verriegelungsglied (104a-c) in der Verriegelungsstellung zur Anlage an die genannte Zunge (750) kommt.

10. Amphibienfahrzeug (100) gemäß Patentanspruch 9, **dadurch gekennzeichnet, dass** die Klappe (706) erste, einen Anschlag bildende, durch Verlängerungen (760) am freien Ende der Klappe (706) realisierte Mittel beinhaltet, die sich quer in Richtung der Klappenaussenseite (706) erstrecken und dazu dienen, mit den Rändern der Öffnung (702) zusammenzuwirken, um die Drehung der Klappe (706) über eine, dem Eingang der genannten Klappe (706) in der Aufnahme (106b-c) entsprechende Grenzstellung hinaus zu verhindern.

11. Amphibienfahrzeug (100) gemäß einem der Patentansprüche 9 oder 10, **dadurch gekennzeichnet, dass** eine Rolle (782) am freien Ende der Klappe (706) frei drehbar montiert ist.

## Claims

1. Amphibious vehicle (100, 1000) comprising:
- a chassis (102) having at least one housing (106a-c) having an opening (202, 702) having edges,
- for said or each housing (106a-c), a handling device (108a-c) having a fixed part (210, 710) fixed to the chassis (102) and a movable part (104a-c, 212, 216, 712, 716, 1004) mounted so as to be able to move on said fixed part (210, 710) and comprising among other things a wheel (104a-c, 1004), said movable part (104a-c, 212, 216, 712, 716, 1004) being able to move between a running position (Fig. 1) in which said wheel (104a-c, 1004) is outside said housing (106a-c), and a retracted position (Figs. 3 to 5, 9 and 6B) in which said wheel (104a-c, 1004) is in said housing (106a-c), and
- for each opening (202, 702), a hatch system (204, 704) having a hatch (206, 706, 1006), designed to adopt alternately an open position (Figs. 2, 3 and 8) in which said hatch (206, 706, 1006) does not close off said opening (202, 702) or a closed position (Figs. 5, 9 and 6B) in which said hatch (206, 706, 1006) comes into abutment against the edges of the opening (202, 702) and at least partly closes off said opening (202, 702),
each movable part (104a-c, 212, 216, 712, 716, 1004) being designed to be moved into a locking position wherein a locking element (104a-c, 1050) of said movable part (104a-c, 212, 216, 712, 716, 1004) locks the associated hatch (206, 706, 1006) in the closed position by abutment thereof against said hatch (206, 706, 1006).

2. Amphibious vehicle (100, 1000) according to claim 1, **characterised in that** said locking element is the wheel (104a-c, 1050) of said movable part (104a-c, 212, 216, 712, 716, 1004).

3. Amphibious vehicle (1000) according to claim 2, **characterised in that** the wheel (1004) has a rim (1050), **in that** said locking element is said rim (1050), **in that** said hatch has a cradle (1052) and **in that**, in the locking position, the rim (1050) is placed on the cradle (1052).

4. Amphibious vehicle (1000) according to claim 3, **characterised in that** the rim (1050) is traversing with respect to the tyre, **in that** the cradle (1052) consists of two walls (1054a-b), each wall (1054a-b) receiving one of the ends of the rim (1050) in the locking position.

5. Amphibious vehicle (100, 1000) according to one of claims 1 to 4, **characterised in that** the hatch (206, 1006) is housed inside the housing (106a), and **in that** said locking element (104a, 1004) comes into the locking position in abutment on the internal side of said housing (106a) against said hatch (206, 1006).

6. Amphibious vehicle (100, 1000) according to one of claims 1 to 5, **characterised in that** said hatch system (204) comprises a manoeuvring system (208) comprising a frame (604) on which the hatch (206, 1006) is mounted, and movement means designed to move said frame (604), **in that** said frame (604) has an empty space (612) enabling said locking element (104a, 1004) to pass and to come into abutment against said hatch (206, 1006) in the locking position, and **in that** the hatch (206, 1006) is fixed to the frame (604) by means of a suspension system (620).

7. Amphibious vehicle (100, 1000) according to claim 6, **characterised in that** the abutment zone of said locking element (104a) in the locked position is concentric with respect to the opening (202).

8. Amphibious vehicle (100) according to one of claims 6 or 7, **characterised in that** the movement means comprise two groove carriers (600a-b), each disposed on either side of the opening (202) and having a guide groove (602a-b), and an activation system (610a-b) designed to move the frame (604) along the two grooves (602a-b).

9. Amphibious vehicle (100) according to one of claims 1 or 2, **characterised in that** said hatch (706) is mounted so as to be able to move in rotation on said chassis (102) about a principal rotation axis (752), **in that** said hatch (706) comprises a tongue (750) extending it beyond the principal rotation axis (752), and **in that** said locking element (104a-c), in the locking position, comes into abutment against said tongue (750).

10. Amphibious vehicle (100) according to claim 9, **characterised in that** the hatch (706) comprises first means forming a stop consisting of extensions (760) produced at the free end of the hatch (706) and extending transversely towards the outside of the hatch (706) and which are intended to cooperate with the edges of the opening (702) in order to prevent the rotation of said hatch (706) beyond a limit position corresponding to the entry of said hatch (706) in the housing (106b-c).

11. Amphibious vehicle (100) according to one of claims 9 or 10, **characterised in that** a roller (762) is mounted so as to be free to rotate at the free end of the hatch (706).
